# EUROPÄISCHE PATENTANMELDUNG

(11) **EP 2 522 231 A1**
(43) Veröffentlichungstag der Anmeldung: **14.11.2012**
(21) Anmeldenummer: 11165346.5
(22) Anmeldetag: 09.05.2011
(51) Int. Cl.: A23L 1/03, A23L 1/308, A21D 2/02

(54) **Kalorienreduzierte und verdauungsfördernde Nahrungsmittel**

(71) Anmelder: Mondo Minerals Deutschland GmbH, 42329 Wuppertal (DE)
(72) Erfinder: Keller, Wulf-Dietrich, 63619, Bad Orb (DE)
(74) Vertreter: Fuchs

(57) **Zusammenfassung**

Die vorliegende Erfindung betrifft kalorienreduzierte und verdauungsfördernde Nahrungsmittel, die einen brennwerthaltigen Anteil aufweisen, und die mit Talk versetzt sind.

Brennwerthaltige Anteile sind ausgewählt aus der Gruppe bestehend aus Kohlenhydraten, Eiweißen (Proteinen) und Fetten. Zucker sind unter Kohlenhydrate zu subsummieren.

Beschreiben wird ein Nahrungsmittel, das einen brennwerthaltigen Anteil aufweist, wobei mindestens 10 Gew.-% Talk, bezogen auf das Gesamtgewicht des Nahrungsmittels, im Nahrungsmittel vorliegen.

## Beschreibung

Die vorliegende Erfindung betrifft kalorienreduzierte und verdauungsfördernde Nahrungsmittel, die einen brennwerthaltigen Anteil aufweisen, und die mit Talk versetzt sind. Die vorliegende Erfindung betrifft ferner die Verwendung von Talk zur Reduzierung des Brennwertes von Nahrungsmitteln.

Brennwerthaltige Anteile sind ausgewählt aus der Gruppe bestehend aus Kohlenhydraten, Eiweißen (Proteinen) und Fetten. Zucker sind unter Kohlenhydrate zu subsummieren.

In der heutigen Zeit ist Übergewicht in der Bevölkerung der Industrienationen ein Faktor, der die Gesundheit erheblich beeinträchtigt. Der Anteil Übergewichtiger ist im Vergleich zu 1999 (56% der Männer und 40% der Frauen) deutlich gestiegen. So waren nach dem statistischen Bundesamt im Jahr 2009 insgesamt 51% der erwachsenen Bevölkerung übergewichtig, 60% der Männer und 43% der Frauen. Neben erhöhter Belastung von Knochen und Gelenken führt Übergewicht auch zu Herzkreislauferkrankungen und vielen anderen Beschwerden, wie beispielsweise dem metabolischen Syndrom. Nach Befragungen zum Gesundheitszustand, so das statistisches Bundesamt Deutschland aus dem Jahr 2009, bezeichnen sich knapp 15% der Bevölkerung, die Angaben zu ihrem Gesundheitszustand machten, als gesundheitlich beeinträchtigt. Solche Personen hatten deutlich häufiger Übergewicht oder starkes Übergewicht als Personen, die sich als gesund bezeichnen.

Erwiesenermaßen sind Bewegungsmangel und eine damit einhergehende zu hohe Kalorienzufuhr für Übergewicht verantwortlich. Problematisch ist, dass sich viele Menschen quantitativ und qualitativ nicht gesund und ausgewogen ernähren. Eine kohlenhydratreiche Speise beispielsweise bedingt nach der Nahrungsaufnahme eine Insulinausschüttung. Insulin, auch als Speicherhormon bezeichnet, bewirkt die Einlagerung von Energiereserven, insbesondere von Fett in Fettzellen und die Absenkung des Blutzuckerspiegels. Somit sind fett-und kohlenhydrathaltige Nahrungsmittel ernährungsphysiologisch als besonders kritisch einzuschätzen. Noch kritischer sind fett- und zuckerhaltige Speisen, was auf die meisten Süßspeisen zutrifft, da Fett als Geschmacksträger eingesetzt wird. Hier bedingt der Zucker im Nahrungsmittel eine rasche Ausschüttung von Insulin. Fette werden unter diesen Bedingungen optimal verdaut und resorbiert. Insulin bedingt danach die Anlage von Fettreserven in den Fettzellen. Ferner bedingt ein schneller Anstieg des Insulinspiegels die rasche Umwandlung von Zucker in Glykogen und folglich einen Abfall des Blutzuckerspiegels, was ein Hungergefühl auslöst, so dass nach zu kurzer Zeit wieder Nahrung aufgenommen werden wird. Die Folge ist Übergewicht.

Fett spielt bei der Nahrungsaufnahme mit Blick auf die Menge an zu sich genommenen Kilokalorien eine wesentliche Rolle. Ein Gramm Fett hat einen Nährwert von 9,3 Kilokalorien während ein Gramm Kohlenhydrate 6,2 Kilokalorien entspricht, ein Gramm Eiweiß entspricht 4,1 Kilokalorien. Daher tragen fette Speisen insbesondere zu Übergewicht bei, was für süße, fette Speisen aus oben genannten Gründen noch vermehrt gilt.

Neben Übergewicht ist Karies eine weitverbreitete Erkrankung in allen Bevölkerungsgruppen der Industrienationen, insbesondere bei Kindern. Die Aufnahme von zucker- und/oder kohlenhydrathaltigen Nahrungsmitteln und deren Verbleib im Mund bedingt unter anderem das Krankheitsbild der Karies. Kohlenhydrate werden im Mund durch die Enzyme des Speichels zu Zucker abgebaut. Zucker trägt zur Vermehrung der Kariesbakterien im Mund bei, die das Krankheitsbild der Karies mit bedingen.

Fehlernährung und/oder Bewegungsmangel können zudem Verdauungsprobleme bewirken, Darmträgheit bis hin zu Obstipation sind weit verbreitete Probleme. Der ohne Rezept mögliche Gebrauch von chemischen Laxantien ohne ärztliche Aufsicht wird als sehr kritisch eingeschätzt. Chronischer Abusus und damit verbundene negative Folgen stellen ein Problem in unserer heutigen Gesellschaft dar. Ballaststoffreiche Nahrungsmittel, die das Problem auch beheben könnten, sind jedoch bei großen Teilen der Bevölkerung weniger beliebt.

In der EP 0 338 931 B1 werden Produkte beschrieben, die eine Emulsion aus einer wässrigen Phase und einer öligen Phase darstellen, wobei die ölige Phase Paraffinkohlenwasserstoffe enthält, die mit fettlöslichem Lecithin in einer Menge zwischen 0,01 und 5 Gew.-% versetzt sind, wobei die wässrige Phase gekennzeichnet ist durch einen Extrakt an wasserdispergierbarem Lecithin, der mit Phosphatidylcholin in einer Menge zwischen 0,01 und 5 Gew.-% angereichert ist. Zusätzlich können solche Produkte ein Mineralpulver, auch Talk, enthalten. Die Reduzierung des Kaloriengehaltes der Produkte erfolgt durch den Ersatz von Fetten, wie beschrieben.

DE 3 532 283 A1 beschreibt ein Verfahren zur Haltbarmachung von Nahrungsmitteln, wobei kleine Mengen an Mehl und/oder Mineralstoffen für die Haltbarmachung verwendet werden können.

BG 0 109 308 A und RU 2 376 888 C2 beschreiben Nahrungsergänzungsmittel, welche unter anderem Mehl und Talk enthalten können.

Schließlich beschreibt die DE 2 538 076 A1 eine Verfahren zur Herstellung eines Schnellkochreises, wobei der Reis mit z.B. Talk gemischt und gelatiniert wird und anschließend mit Mehl oder Talk versetzt werden kann.

Es besteht ein großer Bedarf an brennwerthaltigen Nahrungsmitteln, d.h. Nahrungsmitteln, die einen brennwerthaltigen Anteil aufweisen, die kalorienreduziert sind, d.h. einen geringen Nährwert haben, dabei jedoch nicht an Geschmack einbüßen. Zudem sollten die Nahrungsmittel verdauungsfördernd sein und idealerweise die Resorption von Fetten oder deren Bestandteile im Darm vermindern. Ferner sollen die Nahrungsmittel im Mund eine angenehme Haptik haben und damit ein angenehmes Gefühl hervorrufen. Die kalorienreduzierten brennwerthaltigen Nahrungsmittel sollen zudem möglichst lagerstabil sein.

Es besteht damit auch ein Bedarf an einem Stoff, der Nahrungsmitteln zugesetzt werden kann, und damit an dem entsprechenden Nahrungsmittel, um zuvor genannte Eigenschaften zu erzielen. Idealerweise kann ein solcher Stoff dergestalt zur Kalorienreduzierung in Nahrungsmitteln eingesetzt werden, dass wahlweise verschiedene brennwerthaltige Anteile, nämlich kohlenhydrathaltige und/oder fetthaltige Anteile, in Nahrungsmitteln ersetzt werden können. Insbesondere besteht ein Bedarf an einem Stoff, der kohlenhydrathaltige Anteile in einem Nahrungsmittel ersetzen kann, insbesondere Mehl.

Weitere Anforderungen an einen solchen Stoff sind, dass der Preis des Nahrungsmittels nicht erhöht, sondern möglichst sogar vergünstigt wird. Idealerweise lässt sich das Nahrungsmittel bei verringerten Temperaturen herstellen, was Energie spart und somit die Kosten für das Nahrungsmittel durch geringere Herstellungskosten weiter senken kann.

Alle genannten Aufgaben der vorliegenden Erfindung können überraschenderweise dadurch gelöst werden, dass mindestens 10 Gew.-%, bezogen auf das gesamte Nahrungsmittel, Talk einem Nahrungsmittel zugesetzt werden, das einen brennwerthaltigen Anteil aufweist.

In den erfindungsgemäßen Nahrungsmitteln können brennwerthaltige Anteile, wie Kohlenhydrate, insbesondere Mehl unabhängig von der Type und des Mahlgrades, und/oder Fette, durch Talk ersetzt werden.

Das Nahrungsmittel kann ferner unverdauliche Stoffe enthalten, wie Fasern, Cellulose oder dergleichen, Wasser oder wässrige Komponenten, andere Mineralstoffe als Talk, Spurenelemente, Farbstoffe und sonstige andere Komponenten, die zum Verzehr geeignet sind.

Talk (in pulverisierter Form *Talkum*) auch als Steatit oder unter seiner chemischen Bezeichnung Magnesiumsilikathydrat bekannt, ist ein sehr häufig vorkommendes Mineral aus der Mineralklasse der Silicate und Germanate. Talk ist in der EU als Lebensmittelzusatzstoff der Nummer *E 553b* zugelassen. Um die Nahrungsmittel erfindungsgemäß mit Talk zu versetzen wird der Fachmann geeignet reinen und entsprechend zum Verzehr unbedenklichen Talk wählen. Die Substanz wird wegen ihrer gesundheitlichen Unbedenklichkeit nicht nur in Nahrungsmitteln, sondern auch in der Kosmetik- und Arzneimittelindustrie eingesetzt.

Talk hat eine Reihe von Eigenschaften, welche ihn für diese Einsätze qualifizieren: Neben seiner gesundheitlichen Unbedenklichkeit ist er eine Substanz, die vom menschlichen Körper unverdaut ausgeschieden wird und dementsprechend einen Nährwert von Null aufweist. In der Nahrungsmittelindustrie wird es bereits heute als geschmacksneutrales Antihaftmittel, z. B. in Schnittkäse, Würsten, etc. eingesetzt.

Erfindungsgemäß ist ein Nahrungsmittel eine zum Verzehr geeignete Substanz oder Mischung aus verschiedenen zum Verzehr geeigneten Substanzen, die der Ernährung im Sinne einer Energiezufuhr dienen. Im Sinne der vorliegenden Erfindung erstreckt sich die Bedeutung des Begriffs "Nahrungsmittel" nicht auf Nahrungsergänzungsmittel. Nahrungsergänzungsmittel sind Mittel, die zur Versorgung mit Stoffen dienen, die nicht in erster Linie Energieträger sind. Beispiele für solche Stoffe sind Vitamine und Spurenelemente.

Durch den Zusatz von mindestens 10 Gew.-% Talk, bezogen auf das Gesamtgewicht des Nahrungsmittels, zu einem Nahrungsmittel mit brennwerthaltigen Anteilen, ergeben sich verschiedene Vorteile:
- Das Nahrungsmittel enthält weniger Fett.
- Das Nahrungsmittel enthält weniger Kohlenhydrate.
- Das Nahrungsmittel enthält weniger Fett und weniger Kohlenhydrate.
- Der Kaloriengehalt des Nahrungsmittels ist deutlich reduziert.
- Das Nahrungsmittel verursacht weniger Karies.
- Das Nahrungsmittel wirkt als so genanntes "bulking agent" volumenvergrößernd im Darm und damit verdauungsfördernd.
- Das Nahrungsmittel kann die Resorption von Fetten oder deren Bestandteilen aus dem Darm vermindern und hat damit eine positive Auswirkung auf den Fettstoffwechsel.
- Das Nahrungsmittel ist kostengünstiger als das entsprechende Nahrungsmittel, in dem kein Ersatz vorgenommen wurde.
- Die Haltbarkeit des Nahrungsmittels ist verbessert.
- Das Nahrungsmittel trocknet nicht so schnell aus, wie ein entsprechendes Nahrungsmittel, in dem kein Ersatz vorgenommen wurde.
- Das Nahrungsmittel lässt sich kostengünstig und umweltfreundlich unter Verbrauch von weniger Energie her- oder fertigstellen. Insbesondere das Backen eines erfindungsgemäßen Nahrungsmittels kann energiesparend erfolgen.

Der verminderte Nährwert des Nahrungsmittels macht dieses geeignet zur ernährungsbewussten Ernährung, beispielsweise bei Übergewicht und Fettleibigkeit/Adipositas.

Ein verminderter Gehalt an Kohlenhydraten macht das Nahrungsmittel geeignet zur kalorienreduziertre Ernährung, insbesondere auch bei Fettleibigkeit, da nach dem Verzehr weniger Insulin ausgeschüttet wird und folglich weniger Fettreserven ausgebildet werden. Dieser Effekt ist besonders ausgeprägt wenn in einem Nahrungsmittel der Zusatz von Talk sowohl kohlenhydrathaltige Anteile als auch fetthaltige Anteile ersetzt.

Kohlenhydratreduzierte Nahrungsmittel sind beispielsweise auch für Diabetiker geeignet.

Der im Vergleich zu einem typischen kohlenhydrathaltigen Anteil in einem Nahrungsmittel, wie beispielsweise Mehl, verringerte Preis von Talk macht das Nahrungsmittel insgesamt preisgünstiger. Dies gilt ebenso wenn ein fetthaltiger Anteil in einem Nahrungsmittel durch Talk ersetzt wird.

Erfindungsgemäß wird ein Nahrungsmittel bereit gestellt, das einen brennwerthaltigen Anteil aufweist, dadurch gekennzeichnet, dass mindestens 10 Gew.-% Talk, bezogen auf das Gesamtgewicht des Nahrungsmittels, im Nahrungsmittel vorliegen. Brennwerthaltige Anteile sind ausgewählt aus Kohlenhydraten, Eiweißen oder Fetten. Bevorzugt macht der brennwerthaltige Anteil mindestens 50 Gew.-%, bezogen auf das gesamte Nahrungsmittel, aus. Weiter bevorzugt beträgt der brennwerthaltige Anteil des Nahrungsmittels mindestens 70 Gew.-% und besonders bevorzugt mindestens 85 Gew.-% an der Gesamtmasse des Nahrungsmittels.

Sofern im Folgenden Bereiche für verschiedene Anteile an im Nahrungsmittel vorliegenden Komponenten genannt werden, wird der Fachmann stets entsprechende Untergrenzen und Obergrenzen miteinander kombinieren.

Bevorzugt liegen 50 Gew.-%, bezogen auf das gesamte Nahrungsmittel, Kohlenhydrate im Nahrungsmittel vor. In einer weiter bevorzugten Ausführungsform erreicht der Anteil an Kohlenhydraten im Nahrungsmittel einen Wert von mindestens 65 Gew.-%, besonders bevorzugt mindestens 80 Gew.-%, bezogen auf die Gesamtmasse des Nahrungsmittels.

Bevorzugte Mengen an Kohlenhydraten im Nahrungsmittel sind zwischen 50 Gew.-% und 80 Gew.-%, bezogen auf das gesamte Nahrungsmittel.

Gemäß einer weiteren Ausführungsform liegen mindestens 30 Gew.-%, bezogen auf das gesamte Nahrungsmittel, Fett im Nahrungsmittel vor.

In einer bevorzugten Ausführungsform beträgt der Anteil an Fett im Nahrungsmittel mindestens 40 Gew.-%, besonders bevorzugt, mindestens 50 Gew.-% bezogen auf die Gesamtmasse des Nahrungsmittels.

Fett kann in Mengen zwischen 30 Gew.-% und 50 Gew.-%, bezogen auf das gesamte Nahrungsmittel, im Nahrungsmittel vorliegen.

Nahrungsmittel, bei denen gemäß der vorliegenden Erfindung brennwerthaltige Anteile durch Talk ganz oder teileweise ersetzt werden, enthalten einen Eiweißanteil von nicht weniger als 10 Gew.-%, bevorzugt nicht weniger als 20 Gew.-% und besonders bevorzugt nicht weniger als 25 Gew.-% gemessen an der Gesamtmasse des Nahrungsmittels.

Gemäß einer weiteren Ausführungsform liegen mindestens 30 Gew.-%, bezogen auf das gesamte Nahrungsmittel, Eiweiß im Nahrungsmittel vor. Eiweiß kann in Mengen zwischen 30 Gew.-% und 80 Gew.-%, bezogen auf das gesamte Nahrungsmittel, im Nahrungsmittel vorliegen.

Das Nahrungsmittel kann ferner unverdauliche und nicht brennwerthaltige Bestandteile, wie Fasern, Mineralien oder Mineralstoffe außer Talk, vom menschlichen Organismus unverdauliche Nahrungsmittelbestandteile, wie etwa Cellulose, etc., wässrige Anteile oder sonstige verzehrbare Anteile enthalten, beispielsweise in Mengen zu mindestens 10 Gew.-%, bezogen auf das gesamte Nahrungsmittel.

Erfindungsgemäß sollte der Anteil an Talk im Nahrungsmittel den Wert von bevorzugt mindestens 15 Gew.-% und besonders bevorzugt mindestens 20 Gew.-% nicht unterschreiten.

Erfindungsgemäß bevorzugt liegen höchstens 40 Gew.-% Talk, bezogen auf das Gesamtgewicht des Nahrungsmittels, im Nahrungsmittel vor.

Besonders bevorzugt beträgt der Anteil an Talk am Gesamtgewicht des Nahrungsmittels nicht mehr 37 Gew.-%. In einer weiteren bevorzugten Ausführungsform der Erfindung liegt der Talk-Gehalt im Nahrungsmittel bei maximal 35 Gew.-% bezogen auf das Gesamtgewicht des Nahrungsmittels.

In einer bevorzugten Ausführungsform der Erfindung wird nur ein brennwerthaltiger Bestandteil des Nahrungsmittels durch Talk teilweise oder vollständig ersetzt.

In einer weiteren bevorzugten Ausführungsform werden zwei brennwerthaltige Bestandteile des Nahrungsmittels teilweise oder vollständig durch Talk ersetzt. In einer weiteren bevorzugten Ausführungsform der Erfindung werden drei brennwerthaltige Bestandteile des Nahrungsmittels teilweise oder vollständig durch Talk ersetzt.

Bevorzugt liegen von 15 Gew.-% bis 35 Gew.-% Talk, bezogen auf das Gesamtgewicht des Nahrungsmittels, im Nahrungsmittel vor.

Erfindungsgemäß bevorzugt werden mindestens 10 Gew.-%, bezogen auf das Gesamtgewicht des Nahrungsmittels, mindestens eines brennwerthaltigen Anteils des Nahrungsmittels durch Talk ersetzt. Weiter bevorzugt werden zwischen 10 Gew.-% und 40 Gew.-%, bezogen auf das Gesamtgewicht des Nahrungsmittels, mindestens eines brennwerthaltigen Anteils des Nahrungsmittels durch Talk ersetzt.

Gemäß einer weiteren Ausführungsform werden im Nahrungsmittel zwischen 10 Gew.-% und 25 Gew.-%, bezogen auf das Gesamtgewicht des Nahrungsmittels, eines Fettes durch Talk ersetzt.

Gemäß einer weiteren Ausführungsform werden im Nahrungsmittel zwischen 10 Gew.-% und 40 Gew.-%, bezogen auf das Gesamtgewicht des Nahrungsmittels, eines Kohlenhydrates durch Talk ersetzt.

Bei der Ausführung der vorliegenden Erfindung hat sich überraschenderweise gezeigt, dass beispielsweise Backwaren, die mit Talk versetzt wurden, weniger schnell austrocknen als entsprechende nicht mit Talk versetzte Backwaren.

Ferner ist ein mit Talk versetztes Nahrungsmittel besser haltbar, insbesondere der Befall mit Bakterien kann vermindert werden, was auch an dem geringen Nährwert liegt. Beispielsweise bildet sich Schimmel nicht so schnell aus, was wiederum die Lagerfähigkeit verbessert.

Aufgrund der unterschiedlichen spezifischen Wärme für Talk und Mehl lassen sich Nahrungsmittel, die durch Backen zubereitet werden, bei geringeren Temperaturen zubereiten. So sind 150°C bis maximal 180°C als Backtemperatur ausreichend, währende entsprechende Backmischungen, in welchen kein Anteil durch Talk ersetzt wurde, bei 185° bis 200°C gebacken werden müssen. Bei der industriellen Herstellung von Lebensmitteln hat eine solche Temperaturerniedrigung einen erheblichen Effekt auf den Verbrauch von Energie. Die erfindungsgemäßen Nahrungsmittel lassen sich demzufolge energiesparend und damit umweltfreundlich herstellen.

Erfindungsgemäß konnte auch gezeigt werden, dass der Zusatz von Talk zu Nahrungsmitteln, die durch Backen hergestellt werden, den Backvorgang nicht stört. Dies ist aus folgenden Gründen als überraschend einzustufen:

Die Vorgänge beim Backen sind komplex. Die Backhitze dringt zunächst von außen nach innen in das Teigstück vor. Der teigige Kern des Backguts wird nach und nach zu einer festen Krume, beispielsweise der Brotkrume, umgebildet. Gleichzeitig wird die feuchte Oberfläche des Backstückes nach und nach zu einer festen und gebräunten Kruste umgebildet. Dabei laufen verschiedene Umwandlungsvorgänge je nach erreichter Temperatur zeitgleich ab. Während noch im Kern eine teigige Beschaffenheit vorliegt, ist die Krume im Randbereich bereits verfestigt und an der Oberfläche bildet sich schon die Kruste. Bei der Krumenbildung sind folgende Vorgänge beteiligt: Der Teig kommt mit Garraumtemperatur in den Ofen. Die Kerntemperatur des Teiges steigt beim Backen nur langsam an. Dabei kommt es zunächst zwischen 35°C und 45°C zu einer starken Enzym- und Hefetätigkeit. Diese führt zur Vergrößerung der Teigporen durch Gasausdehnung. Dadurch kommt es zu einer Herauswölbung und starken Volumenzunahme des Backguts (auch als "Ofentrieb" bezeichnet). Bei einer Temperatur ab 50°C wir die Backhefe dann gehemmt. Bei 53°C bis 60°C sterben Säurebildner und Hefezellen ab. Die Eiweißstoffe gerinnen zwischen 60°C und 80°C, dabei geben diese Wasser wieder ab, welches sie bei der Teigbildung aufgenommen hatten. Stärke, wie beispielsweise Roggenstärke, verkleistert bei Temperaturen zwischen 53°C und 73°C. Dabei lagert sie Teigwasser und das bei der Eiweißgerinnung frei werdende Wasser ein. Dieser Vorgang ist entscheidend für die Bildung einer stabilen Brotkrume. Mit steigender Innentemperatur in der sich ausbildenden Brotkrume verdunsten flüchtige Stoffe, wie beispielsweise ab 78°C Gärungsalkohole. Zum Teil verbinden sie sich mit den Säuren des Teigs zu Aromastoffen, indem aus Säuren und Alkohole Ester ausgebildet werden. Ab 98°C schließlich beginnt das Wasser zu verdampfen. Dadurch entsteht der Backverlust.

Im Lichte des zuvor beschriebenen komplexen Backvorgangs, ist es ein erfindungsgemäß überraschender Vorteil, dass der Zusatz von Talk zu einem Nahrungsmittel, wie einem Backgut, nicht zu einer Beeinträchtigung des Backvorgangs führt und zudem das Backgut bei verringertem Energieverbrauch gebacken werden kann.

Die Zugabe von Talk zu Backmischungen kann sogar zu einer geringeren Belastung der Backwaren mit unerwünschten Nebenprodukten des Backvorgangs, beispielsweise Acrylamid, im Vergleich zu herkömmlichen Backwaren führen. Acrylamid wird bevorzugt bei trockenen Backvorgängen in Nahrungsmitteln gebildet, die über einen hohen Stärkegehalt verfügen und bei deren Fertigung über längere Zeiträume Temperaturen über 180°C ausgesetzt werden.

Der erfindungsgemäße Einsatz von Talk, beispielsweise in Backmischungen zur teilweisen Substitution von Mehl, dessen Hauptbestandteil Stärke ist, sowie anderer Kohlenhydrate (darunter auch der Monosaccharide Glucose und Fructose) reduziert zum einen den Anteil gerade jener Stoffe, die als Förderer bei der Acrylamid-Bildung gelten.

Darüber hinaus kann, wie dies bereits oben erwähnt wurde, die maximale Backtemperatur mit Talk versetzter Backmischungen auf Temperaturen zwischen 150 und 180°C abgesenkt werden, also genau unter jene Temperaturgrenze, bei der nachgewiesenermaßen vermehrte Acrylamid-Bildung auftritt.

Erfindungsgemäß können Kohlenhydrate im Nahrungsmittel durch Talk ersetzt werden. Gemäß einer bevorzugten Ausführungform handelt es sich dabei um Mehl. Es kann dabei jede Type von Mehl ersetzt werden. Der Fachmann wird die Beschaffenheit des zu ersetzenden Mehls und des entsprechend eingesetzten Talks beurteilen und eine geeignete Substitution vornehmen. Das Mehl kann beispielsweise Weizenmehl, Roggenmehl, oder eine beliebige andere Mehlsorte der unterschiedlichen Typen sein. Erfindungsgemäß können Talk und Mehl in einem Nahrungsmittel als Mischung in Verhältnissen von 1 Teil Talk zu 1,5 Teilen Mehl bis 1 Teil Talk zu 9 Teilen Mehl eingesetzt werden.

Erfindungsgemäß eingesetzt werden kann Talk als Ersatz von Mehl in beispielsweise, jedoch nicht abschließend, Brot, insbesondere Körner-, Vollkorn-und Biobrot, Brötchen, Brezeln, Baguette, Waren aus Blätter- und Plunderteigen, Waren aus Hefeteig, Mürbeteig, turnierten Teigen und sonstigen Teigen. Es kann sich auch um Kuchenteige, andere Teige für Süßgebäck oder beispielsweise fertige Mischungen für Pfannkuchenteige handeln.

Wird Talk einem Nahrungsmittel zugesetzt, um beispielsweise einen Anteil von Mehl in dem Nahrungsmitteln zu ersetzen, wird der Fachmann die Schüttdichte des Talks gemäß dem entsprechenden Wert des Mehls, je nach Mehltype, wählen.

Erfindungsgemäß eingesetzt werden kann Talk auch als Ersatz einer kohlenhydrathaltigen Komponente, wie beispielsweise Brötchen in Serviettenknödeln. Hierbei können bis zu 40 Gew.-%, bezogen auf das gesamte Nahrungsmittel, Talk im Knödel vorliegen. Bevorzugte Mengen an Talk sind 10 Gew.-% bis 40 Gew.-%, weiter bevorzugt 15 Gew.-% bis 35 Gew.-%, noch weiter bevorzugt 20 Gew.-% bis 30 Gew.-%.

Beispielsweise kann ein Brot Weizenmehl, Roggenmehl, Salz, Hefe, Wasser und Sauerteig umfassen. Erfindungsgemäß können bis zu 40 Gew.-% Talk, bezogen auf das Gesamtgewicht des Brots, im Brot vorliegen. Bevorzugte Mengen an Talk sind 10 Gew.-% bis 40 Gew.-%, weiter bevorzugt 15 Gew.-% bis 35 Gew.-%, noch weiter bevorzugt 20 Gew.-% bis 30 Gew.-%.

Erfindungsgemäß kann die Zugabe von Talk zu dem Nahrungsmittel auch fetthaltige Anteile des Nahrungsmittels, wie beispielsweise Butter, Margarine oder Öl, ersetzen. Damit wird eine erhebliche Kalorienreduzierung erreicht. Je nach Nahrungsmittel kann Talk Fett ersetzen, wobei dies unabhängig oder zusätzlich zum Ersatz eines kohlenhydrathaltigen Anteils, geschehen kann.

Bei gleichzeitigem Ersatz von, beispielsweise, Mehl durch Talk und von Fett durch Talk in einem Nahrungsmittel, hat sich bewährt, Mengen von etwa 2 Gew.-% bis 10 Gew.-% des Fettes, bezogen auf den Gesamtanteil an Fett in dem Nahrungsmittel, durch Talk zu ersetzen. Bevorzugt werden zwischen 4 Gew.-% und 8 Gew.-% an Fett, bezogen auf die Gesamtmenge an Fett, durch Talk ersetzt, weiter bevorzugt zwischen 4,5 Gew.-% und 5,5 Gew.-% und am meisten bevorzugt etwa 5 Gew.-%. Insgesamt beträgt der Anteil an Talk im Nahrungsmittel mindestens 10 Gew.-%, bezogen auf das gesamte Nahrungsmittel.

Aufgrund der hydrophoben und oleophilen Eigenschaften des Talks eignet sich dieser auch als Zusatz zu Ölen. Beispielsweise kann bei der Herstellung von Mayonnaise der Ersatz eines Teils des Öls durch Talk dazu beitragen, dass das Emulgieren kontrolliert werden kann während gleichzeitig der der Ölgehalt vermindert wird. Ein kalorienreduziertes Öl umfasst erfindungsgemäß mindestens 10 Gew.-% an Talk, bevorzugt zwischen 10 Gew.-% und 40 Gew.-%, weiter bevorzugt zwischen 15 Gew.-% bis 35 Gew.-%, noch weiter bevorzugt 20 Gew.-% bis 30 Gew.-%. Gleiches gilt für eine kalorienreduzierte Sahne. Eine solche kann in Sahnecremes, Torten oder anderen Konditoreiwaren eingesetzt werden Es besteht darüber hinaus sogar die Vermutung, dass Talkzusätze die Resorption von Fetten im Darm des Menschen beeinträchtigen können und auch dadurch den Nährwert der Nahrungsmittel reduzieren können.

Durch seine fettartige Konsistenz dient Talk darüber hinaus als guter Träger für Geschmacks- und Aromastoffe.

Vorteilhaft ist auch seine gute Mischbarkeit mit anderen Ergänzungsstoffen in verschiedenen Nahrungsmitteln.

### Ausführungsbeispiele

### 1. Roggenbrot

Für 1 kg Roggenbrot werden 600 g Roggenmehl und 400 g Talk mit etwa 1 Teelöffel Salz vermengt. Ein Würfel frische Hefe wird in etwa 20 ml Milch mit einer Prise Zucker vorsichtig erwärmt bis die Hefe aufgeht. Aus dem Mehl-Talk-Gemisch und der Hefe wird unter Zugabe der geeigneten Menge an lauwarmem Wasser, das je nach Geschmack auch mit Salz versetzt sein kann, ein homogener Teig hergestellt und in eine geeignete Form geknetet. Der ausgeformte Teig wird in einer Tonform bei 50 °C im Ofen gelagert, etwa eine Stunde lang, bis dieser aufgegangen ist. Danach wird das Brot auf einem Backblech zunächst für 10 Minuten bei 250 °C gebacken, dann weitere 50 Minuten bei 175°C fertig gebacken.

**Tabelle 1 enthält einen Vergleich des Nährwertes eines auf diese Weise hergestellten Brotes und eines Roggenbrotes, das nach einem klassischen Rezept (ohne Talk-Zusätze) hergestellt wurde:**

| Tab. 1: Zutaten und Nährwerte eines erfindungsgemäßen Roggenbrots und einer Standard-Rezeptur für Roggenbrot im Vergleich | | | | |
|---|---|---|---|---|
| Zutaten | Standard-Rezeptur | | Erfindungsgemäße Rezeptur | |
| | Masse; Volumen (bei FI.) [g]; [mL] | Nährwert [∼kcal] | Masse [g] | Nährwert [∼kcal] |
| Roggenmehl (Type: 650-1800) | 1000 | 3240 | 600 | 1944 |
| Plustalc ® H30 | 0 | 0 | 400 | 0 |
| Vollmilch (3,5% Fett) | 20 | 13 | 20 | 13 |
| Hefe (frisch) | 42 | 132 | 42 | 132 |
| Zucker (weiß) | 10 | 41 | 10 | 41 |
| Kochsalz | 10 | 0 | 10 | 0 |
| Summe | 1082 | 3426 | 1082 | 2130 |
| | | (100%) | | (62,2%) |

Ein nach der erfindungsgemäßen Rezeptur hergestelltes Roggenbrot weist demnach einen um knapp 38% geringeren Nährwert auf, als ein Roggenbrot, das anhand einer Standard-Rezeptur hergestellt wurde.

### 2. Rührkuchen

300 g Weizenmehl (Typ 405) werden mit 100 g Talk vermischt. Hinzu wird 1 Teelöffel Backpulver gegeben. 125 g Butter werden erwärmt, bis die Butter fast zerlassen ist. Das Fett wird mit dem Mehl-Talk-Gemisch vermengt und unter Rühren werden 2 Eier und 100 g Zucker sowie eine Tüte Vanillezucker oder Vanillezucker zugegeben. Der Teig wird in eine geeignete Form gegeben und bei 175°C etwa 45 bis 50 Minuten lang gebacken. Der Fachmann wird die hier beschriebene Teigmischung in beliebiger Weise - je nach persönlichen Präferenzen - mit verschiedenen Gewürzen anreichern, die jedoch - gemessen am Brennwert der hier erwähnten Bestandteile - einen minimalen Beitrag zum Gesamtbrennwert des Nahrungsmittels beitragen und deswegen bei dessen Berechnung vernachlässigt werden können.

Die nachfolgende Tabelle enthält einen Vergleich der Rezepturen und des Nährwertes eines erfindungsgemäß hergestellten Rührkuchens und eines Rührkuchens, der nach einem Standard-Rezept (ohne Talk-Zusätze) hergestellt wurde:

| Tab. 2: Zutaten und Nährwerte eines erfindungsgemäßen Rührkuchens und einer Standard-Rezeptur für einen Rührkuchen im Vergleich | | | | |
|---|---|---|---|---|
| Zutaten | Standard-Rezeptur | | Erfindungsgemäße Rezeptur | |
| | Masse; Volumen (bei FI.) [g]; [mL] | Nährwert [∼kcal] | Masse [g] | Nährwert [∼kcal] |
| Weizenmehl (Typ: 405) | 300 | 1005 | 160 | 510 |
| Weizenmehl-Vital-Kleber | 0 | 0 | 5 | 3 |
| Plustalc® H30 | 0 | 0 | 180 | 0 |
| Butter | 100 | 866 | 95 | 822 |
| Zucker (weiß) | 100 | 400 | 0 | 0 |
| Süßstoff | 0 | 0 | ∼15 | 0 |
| Eier | 3 | 252 | 3 | 252 |
| Vollmilch (3,5% Fett) | 25 | 16 | 80 | 32 |
| Kochsalz | 10-15 | 0 | 10-15 | 0 |
| Vanillezucker | 10 | 41 | 5 | 20 |
| Vanille-Aroma | 0 | 0 | 5 | 15 |
| Backpulver | 15 | 23 | 20 | 31 |
| Summe | 553 | 2603 | 553 | 1685 |
| | | (100%) | | (64,7%) |

Ein nach der erfindungsgemäßen Rezeptur hergestellte Rührkuchen weist demnach einen um mehr als 35% geringeren Nährwert auf, als ein Rührkuchen, der anhand einer Standard-Rezeptur hergestellt wurde.

### 3. Pasta

Zur Herstellung einer Pasta auf der Basis von Hartweizengries wird ein Gemisch bestehend aus etwa 65% Hartweizengries und etwa 35% Plus-Talk H30 in einem modernen kontinuierlichen Zweiwellenschneckenkneter zu einem homogenen Teig vermengt. Der Fachmann wird ein auf diese Weise hergestelltes Gemenge in beliebiger Weise - je nach persönlichen Präferenzen - mit verschiedenen Kräutern und Gewürzen anreichern, die jedoch - gemessen am Brennwert der hier erwähnten Bestandteile - einen minimalen Beitrag zum Gesamtbrennwert des Nahrungsmittels beitragen und deswegen bei dessen Berechnung vernachlässigt werden können. Vor Zugabe des Talks zum Hartweizengries sollte der Talk bereits mit der erforderlichen Menge an Wasser vermengt worden sein. Dies unterstützt die Homogenisierung des Gemisches aus Talk und Gries erheblich.

Das Verkneten des Gemenges im Kneter sorgt neben einer homogenen Durchmischung des Gemenges auch für eine ausreichende Aktivierung des Klebers im Weizen.

Das verknetete Gemisch wird anschließend mit einer aus dem Stand der Technik bekannten Einwellen-Pasta-Presse durch Matrizen gepresst, um die gewünschten Formen zu erhalten. Ein anschließender Trocknungsprozess auf die Gleichgewichtsfeuchte macht die Pasta haltbar.
In der folgenden Tabelle sind die Nährwerte einer erfindungsgemäßen, auf Talk-Zusätzen basierenden Pasta-Rezeptur und einer Standard-Pasta-Rezeptur einander gegenübergestellt:

| Tab. 3: Zutaten und Nährwerte einer erfindungsgemäßen Pasta und einer Standard-Rezeptur für eine Pasta im Vergleich | | | | |
|---|---|---|---|---|
| Zutaten | Standard-Rezeptur | | Erfindungsgemäße Rezeptur | |
| | Masse [g] | Nährwert [∼kcal] | Masse [g] | Nährwert [∼kcal] |
| Hartweizengrieß | 860 | 2881 | 559 | 1873 |
| Plustalc® H30 | 0 | 0 | 301 | 0 |
| Wasser | 140 | 0 | 140 | 0 |
| Summe: | 1000 | 2881 | 1000 | 1873 |
| | | (100%) | | (65,0%) |

Eine erfindungsgemäße Pasta mit den Zutaten wie in Tabelle 3 dargestellt besitzt einen um 35% geringeren Nährwert als eine Standard-Pasta.

### 4. Süßwaren, z. B.: Marzipan

Zu einem homogenen Gemenge mit der Zusammensetzung: 190 Gramm Puderzucker, 360 Gramm Plus-Talk H50, einigen Millilitern Bittermandel-Aroma und Vanille-Aroma werden 450 Gramm erwärmte Marzipanrohmasse gegeben. Das auf diese Weise entstandene Gemisch wird in einem Kneter homogen vermengt.

| Tab. 4: Zutaten und Nährwerte einer erfindungsgemäßen Marzipan-Mischung und einer Standard-Rezeptur für Marzipan | | | | |
|---|---|---|---|---|
| Zutaten | Standard-Rezeptur | | Erfindungsgemäße Rezeptur | |
| | Masse [g] | Nährwert [∼kcal] | Masse [g] | Nährwert [∼kcal] |
| Marzipanrohmasse | 670 | 3478 | 445 | 2310 |
| Plustalc ® H50 | 0 | 0 | 360 | 0 |
| Puderzucker | 330 | 1320 | 185 | 740 |
| Wasser | 0 | 0 | 0-5 | 0 |
| Bittermandel-Aroma | 0 | 0 | 5 | 35 |
| Vanille-Aroma | 0 | 0 | 5 | 15 |
| Summe: | 1000 | 4798 | 1000 | 3100 |
| | | (100%) | | (64,6%) |

Eine erfindungsgemäß hergestellte Marzipanmischung weist einen um mehr als 35% geringeren Nährwert auf als eine herkömmliche Marzipanmischung. Erfindungsgemäß sind hier der Experimentierfreudigkeit des Fachmanns bei der Wahl weiterer Aromen bei der geschmacklichen Ausgestaltung der Marzipanmischung kaum Grenzen gesetzt.

Plustalc® ist ein Markenname der Firma Mondo Minerals. Bei Plustalc®-Produkten handelt es sich um hochreinen Talk, der als Zusatzstoff zu Speisen geeignet ist und dessen Freiheit von gesundheitsschädlichen und toxischen Zusätzen, insbesondere Schwermetallen, zertifiziert ist. Ferner ist das Produkt bedingt durch den Herstellungsprozess frei von pathogenen Mikroorganismen. Dies beruht im Wesentlichen darauf, dass die Substanzen während des Mahlprozesses bedingt durch die dort entstehende Wärme hohen Temperaturen ausgesetzt sind, welche zu Sterilisation der Produkte beitragen.

Die verschiedenen, hier erwähnten Plustalc®-Sorten z.B. H10, H30, H50 unterscheiden sich in der Korngröße und damit verbundenen physikalischen und chemischen Eigenschaften.

Plustalc® stellt nur eine mögliche Option für eine geeignete Talksorte für die Zubereitung von Speisen gemäß der vorliegenden Erfindung dar. Der Fachmann ist bei der Zubereitung talkhaltiger Speisen gemäß der vorliegenden Erfindung in der Lage, aus der jeweils im Handel erhältlichen, breiten Palette an Talksorten entsprechende Substanzen auszuwählen.

Plustalc® H10 hat die folgenden Spezifikationen:

| | |
|---|---|
| Talkgehalt [Gew.-%] | 96 |
| Weißgehalt/Helligkeit CIE L* [%] (DIN 6174) | 98,0 |
| Weißgehalt/Helligkeit Ry [%] (DIN 53163) | 95 |
| Mittlere Teilchengröße d50 [µm] (Sedigraph) | 2,2 |
| Top Cut d98 [µm] (Sedigraph) | 9 |
| Ölabsorption [g/100g] (ISO 787/5) | 47 |
| Spezifische Oberfläche [m2/g] (ISO 6452) | 10,5 |
| Glühverlust [%] (DIN 53163, 1000 °C) | 5,5 |

Plustalc® H30 hat die folgenden Spezifikationen:

| | |
|---|---|
| Talkgehalt [Gew.-%] | 96 |
| Weißgehalt/Helligkeit CIE L* [%] (DIN 6174) | 97,0 |
| Weißgehalt/Helligkeit Ry [%] (DIN 53163) | 93 |
| Mittlere Teilchengröße d50 [µm] (Sedigraph) | 8,0 |
| Top Cut d98 [µm] (Sedigraph) | 26 |
| Ölabsorption [g/100g] (ISO 787/5) | 33 |
| Spezifische Oberfläche [m2/g] (ISO 6452) | 6.0 |
| Glühverlust [%] (DIN 53163, 1000 °C) | 5.5 |

Plustalc® D30E hat die folgenden Spezifikationen:

| | |
|---|---|
| Talkgehalt [Gew.-%] | 96 |
| Weißgehalt/Helligkeit CIE L* [%] (DIN 6174) | 97.0 |
| Weißgehalt/Helligkeit Ry [%] (DIN 53163) | 91 |
| Mittlere Teilchengröße d50 [µm] (Sedigraph) | 10.0 |
| Top Cut d98 [µm] (Sedigraph) | 24 |
| Ölabsorption [g/100g] (ISO 787/5) | 28 |
| Spezifische Oberfläche [m2/g] (ISO 6452) | 4.7 |
| Glühverlust [%] (DIN 53163, 1000 °C) | 5.5 |

Plustalc® D40 hat die folgenden Spezifikationen:

| | |
|---|---|
| Talkgehalt [Gew.-%] | 96 |
| Weißgehalt/Helligkeit CIE L* [%] (DIN 6174) | 97.0 |
| Weißgehalt/Helligkeit Ry [%] (DIN 53163) | 91 |

| | |
|---|---|
| Mittlere Teilchengröße d50 [µm] (Sedigraph) | 18.0 |
| Top Cut d98 [µm] (Sedigraph) | 45 |
| Ölabsorption [g/100g] (ISO 787/5) | 26 |
| Spezifische Oberfläche [m2/g] (ISO 6452) | 4.5 |
| Glühverlust [%] (DIN 53163, 1000 °C) | 5.5 |

## Patentansprüche

1. Ein Nahrungsmittel, das einen brennwerthaltigen Anteil aufweist, **dadurch gekennzeichnet, dass** es Talk in einem Anteil von mindestens 10 Gew.-% enthält.

2. Das Nahrungsmittel gemäß Anspruch 1, wobei der brennwerthaltige Anteil ausgewählt ist aus Kohlenhydraten, Eiweißen oder Fetten.

3. Das Nahrungsmittel gemäß Anspruch 1 und/oder 2, wobei der brennwerthaltige Anteil mindestens 50 Gew.-%, bezogen auf das gesamte Nahrungsmittel, ausmacht.

4. Das Nahrungsmittel gemäß einem der vorhergehenden Ansprüche, wobei mindestens 50 Gew.-%, bezogen auf das gesamte Nahrungsmittel, Kohlenhydrate im Nahrungsmittel vorliegen.

5. Das Nahrungsmittel gemäß einem der vorhergehenden Ansprüche, wobei mindestens 30 Gew.-%, bezogen auf das gesamte Nahrungsmittel, Fett im Nahrungsmittel vorliegt.

6. Das Nahrungsmittel gemäß einem der vorhergehenden Ansprüche, wobei mindestens 30 Gew.-%, bezogen auf das gesamte Nahrungsmittel, Eiweiß im Nahrungsmittel vorliegt.

7. Das Nahrungsmittel gemäß einem der vorhergehenden Ansprüche, wobei der Anteil an Talk höchstens 40 Gew.-% beträgt.

8. Das Nahrungsmittel nach einem der vorhergehenden Ansprüche, wobei mindestens 10 Gew.-%, bezogen auf das Gesamtgewicht des Nahrungsmittels, mindestens eines brennwerthaltigen Anteils des Nahrungsmittels durch Talk ersetzt sind.

9. Das Nahrungsmittel nach einem der vorhergehenden Ansprüche, wobei zwischen 10 Gew.-% und 40 Gew.-%, bezogen auf das Gesamtgewicht des Nahrungsmittels, mindestens eines brennwerthaltigen Anteils des Nahrungsmittels durch Talk ersetzt sind.

10. Verwendung von Talk zur Reduktion des Brennwertes von Nahrungsmitteln.

11. Verwendung nach Anspruch 10, wobei mindestens 10 Gew.-%, bezogen auf das Gesamtgewicht des Nahrungsmittels, durch Talk ersetzt sind.

## Geänderte Patentansprüche

### Geänderte Patentansprüche gemäss Regel 137(2) EPÜ.

**1.** Ein Nahrungsmittel, das einen brennwerthaltigen Anteil aufweist, **dadurch gekennzeichnet, dass** es Talk in einem Anteil von mindestens 15 Gew.-% bis zu 40 Gew.-% enthält, wobei mindestens ein brennwerthaltiger Bestandteil des brennwerthaltigen Anteils des Nahrungsmittels teilweise oder vollständig durch Talk ersetzt ist.

**2.** Das Nahrungsmittel gemäß Anspruch 1, wobei mindestens zwei brennwerthaltige Bestandteile des brennwerthaltigen Anteils des Nahrungsmittels teilweise oder vollständig durch Talk ersetzt sind.

**3.** Das Nahrungsmittel gemäß Anspruch 1 oder 2, wobei der brennwerthaltige Anteil ausgewählt ist aus Kohlenhydraten, Eiweißen oder Fetten.

**4.** Das Nahrungsmittel gemäß einem der vorhergehenden Ansprüche, wobei der brennwerthaltige Anteil mindestens 50 Gew.-%, bezogen auf das gesamte Nahrungsmittel, ausmacht.

**5.** Das Nahrungsmittel gemäß einem der vorhergehenden Ansprüche, wobei mindestens 50 Gew.-%, bezogen auf das gesamte Nahrungsmittel, Kohlenhydrate im Nahrungsmittel vorliegen.

**6.** Das Nahrungsmittel gemäß einem der vorhergehenden Ansprüche, wobei mindestens 30 Gew.-%, bezogen auf das gesamte Nahrungsmittel, Fett im Nahrungsmittel vorliegt.

**7.** Das Nahrungsmittel gemäß einem der vorhergehenden Ansprüche, wobei mindestens 30 Gew.-%, bezogen auf das gesamte Nahrungsmittel, Eiweiß im Nahrungsmittel vorliegt.

**8.** Verwendung von Talk zur Reduktion des Brennwertes von Nahrungsmitteln, wobei insgesamt 15 Gew.-% bis 40 Gew.-%, bezogen auf das Gesamtgewicht des Nahrungsmittels durch Talk ersetzt sind.
